# EUROPEAN PATENT APPLICATION

(11) **EP 3 608 009 A1**
(43) Date of publication of application: **12.02.2020**
(21) Application number: 18188597.1
(22) Date of filing: 10.08.2018
(51) Int. Cl.: B01D 35/16, B01D 29/15

(54) **FILTER SYSTEM AND FILTER ELEMENT WITH IMPROVED POSITIONING MEANS**

(71) Applicant: Mann+Hummel GmbH, 71636 Ludwigsburg (DE)
(72) Inventor: Sýkora, Bohumír, 59214 Nove Veseli (CZ)
(74) Representative: Seyboth, Matthias

(57) **Abstract**

The invention relates to a filter system (10) for filtering a fluid, in particular fuel or oil, in particular for a combustion engine of a motor vehicle, which comprises a filter housing (12) with a filter bowl (16) having a drain hole (50) provided in a bottom section (62) thereof and with a filter lid (18) for closure of the filter bowl (16). The filter bowl (16) and the filter lid (18) each have a threaded portion (24, 28) corresponding to each other for directly screwing the filter lid (18) into or onto the filter bowl (16) in a predefined direction of rotation, wherein the threaded portions (24, 28) have a specified thread pitch with respect to the longitudinal axis (40) of the filter housing (12). The filter system further comprises a filter element (14) for arrangement inside the filter housing (12). The filter element (14) has a sealing plug (52) which is located eccentric with respect to a longitudinal axis (40) of the filter element (14) and which serves to seal off the drain hole (50) when the filter element (14) is seated in its predetermined mounting position inside the filter housing (12). The filter system (10) also comprises positioning means for positioning the filter element (14) in its predetermined mounting position.

## Description

### Technical Field

The invention relates to a filter system and a filter element with improved positioning means.

### Prior Art

US 2010/0326392 A1 discloses a liquid filter system having a first filter element and a second filter element. Each filter element has a plug that is received in a corresponding plug receptacle. Thereby, a first plug of the first filter element differs from a second plug of the second filter element.

EP 2 263 773 B1 discloses a filter system having a filter element with a plug that seals an outlet of a filter housing. The filter system furthermore has a valve in order to drain oil in the vicinity of the plug.

DE 20 2012 000 417 U1 discloses a filter system having a filter element with a guiding plate at its bottom for guiding the filter element with respect to a filter housing.

EP 2 653 675 A1 discloses a filter element having cams at its upper end plate. The cams are provided as flow channels for the guidance of liquid at the top of the filter element.

US 2014/0366494 A1 discloses a fluid filter with a housing, a releasable cover, and a replaceable filter element having a filter body and two end discs. The filter element is plugged onto a housing pipe and a locking ring is guided on the pipe, preloaded in a push-out direction. The locking ring is locked in a pushed-out position by a locking device.

US 2008/0202081 A1, DE 43 31 598 A1, DE 39 03 675 A1 and US 2005/0126964 A1 disclose an oil filter for cleaning lubricating oil, comprising a receiving space for receiving a filter element, and a housing with a cover for closing the receiving space. A closing plug is installed on the filter element, closing an outlet of the housing when the filter element is inserted into the receiving space and the receiving space is closed with the cover.

In DE 103 53 424 A1, EP 2 168 651 B1, US 2004/0094464 A1, EP 2 604 321 A1, US 2012/0234743 A1, US 2012/0267293 A1 and DE 10 2008 049 007 A1 a fluid filter system is disclosed having a filter housing and a filter element inside the filter housing. The filter housing provides a guide rail at its bottom for guiding a sealing plug of the filter element towards an opening of the filter housing by turning the filter element.

EP 1 714 688 B1 and US 2009/0139923 A1 disclose a filter system having a closing plate inside a filter housing. The closing plate is operated by a filter element and remains permanently in the filter housing.

EP 2 803 399 A1, US 2014/0183116 A1, US 2012/0261326 A1 and US 2015/0367265 A1 disclose a filter housing with a guiding tube at its bottom. The guiding tube provides a recess for an aligned insertion of a filter element.

US 2011/0017650 A1 discloses a filter system having a filter element. The filter element has an upper end plate and a lower end plate. Each end plate comprises a sealing plug that is received in a corresponding plug receptacle in the filter housing. US 2011/0089091 A1 discloses a similar filter system, wherein at least one of a presence and an absence of a plug in the plug receptacle generates at least one signal.

US 2013/0228503 A1 discloses a fluid filter system comprising a filter housing, a releasable cover and a receptacle filter element having a filter medium and two end plates. The filter element is placed on a standpipe of the filter housing which has on its free side, facing the cover, an axially displaceable end piece. The end piece is preloaded in an expulsion direction. US 2013/0062270 A1 discloses a filter system having a lock profile and a key profile. The filter system is operational when the key profile, which is provided on a lower end plate of a filter element, is received in the lock profile.

The known filter systems have the disadvantage that the guide elements at the bottom of the filter housing take up considerable space and the filter elements are rather difficult to install.

### Disclosure of the invention

It is therefore an object of the invention to provide a filter system with a compact design and a filter element that can be easily installed.

This object of the invention concerning the filter system is solved by the filter system according to claim 1. Further preferred embodiments of the filter system according to the invention are subject of the dependent claims. A filter element according to the invention is specified in independent claim 13.

The filter system according to the invention is used for filtering a fluid, in particular fuel or oil, in particular for a combustion engine of a motor vehicle. Clearly, the filter system, according to the invention, may also be used for filtering water or other fluids as desired.

The filter system comprises a filter housing with a filter bowl having a drain hole provided in a bottom section thereof and with a filter lid for closure of the filter bowl, that is an insertion opening thereof. The filter bowl and the filter lid each have a threaded portion corresponding to each other for directly screwing the filter lid into or onto the filter bowl in a predefined direction of rotation, wherein the threaded portions have a specified thread pitch with respect to the longitudinal axis of the filter housing. The filter system further comprises a filter element for arrangement inside the filter housing, the filter element having a sealing plug which is located eccentric with respect to a longitudinal axis of the filter element and which serves to seal off the drain hole when the filter element is seated in its predetermined mounting position inside the filter housing. There are positioning means for positioning the filter element in its predetermined mounting position. The positioning means comprise a ring-shaped thrust collar which is positioned on an inside of the filter lid for advancing the filter element, in the direction of the longitudinal axis of the filter housing, towards the bottom section of the filter bowl. The thrust collar preferably projects from the filter lid in an axial direction and preferably has a cylindrical shape. The thrust collar has at least one recess for a torque-proof engagement of the filter element to position the filter element in a rotary position with respect to the longitudinal axis of the filter housing in which the sealing plug is aligned with the drain hole of the bottom section in an axial direction. The thrust collar has one or more free edge sections which are each arranged spirally with a defined pitch around the longitudinal axis of the filter housing, the pitch being equal to or smaller than the said thread pitch of the filter bowl and filter lid. The filter element has one or more drive cams which axially project(s) from an end portion of the filter element for engagement with the thrust collar. The said end portion of the filter element thus faces the filter lid. From a production point of view, the thrust collar may be arranged concentrically with respect to the longitudinal axis of the filter housing.

The thrust collar of the filter lid allows to contact and axially move the filter element in an axial direction into and against the bottom section, that is the interior wall surface thereof, of the filter bowl during mounting of the filter lid. Once the filter element makes contact with the said bottom section (interior wall), the drive cam or cams, respectively, upon rotation of the filter lid, can engage in the recesses of the filter element such that the filter element and the filter lid are (temporarily) coupled in a torque-proof manner. The filter element is thus rotated in the predefined direction of rotation when screwing the filter lid onto/into the filter bowl. The filter element can be further rotated by means of the filter lid until the sealing plug is axially aligned with and engaging the drain hole. By the axial movement of the filter element relative to the filter lid associated therewith, the drive cams are disengaged from the recesses of the thrust collar thus again enabling a free rotation of the filter lid with respect to the filter element. By further rotation of the filter lid, with its one or more free edge sections contacting the drive cams in an axial direction, the filter element can be axially pushed into its predefined mounting position by the filter lid in which the sealing plug seals extends into and seals off the drain hole. The filter system according to the invention thus overall allows for a quick, easy and safe mounting of the filter element in its predefined functional position within the filter housing by simply mounting the filter lid on the filter bowl. Further, the filter system can be realized at low manufacturing costs. It is needless to say that the filter housing naturally comprises a fluid inlet for the fluid to be filtered and a fluid outlet for the filtered fluid.

In many technical applications, the filter systems need to be integrated in rather confined spaces and thus need to be of a compact construction. This often necessitates a further interfering structure with respect to the sealing plug, such as an additional fluid opening disposed in/on the bottom section, and which may interfere with the rotation of the filter element to axially align the sealing plug with the drain hole to be closed off.

The said fluid opening may, for instance, serve as a fluid inlet for the fluid to be filtered or as an aforementioned fluid outlet of the filter housing for the filtered fluid. According to a preferred embodiment of the invention, the positioning means may, therefore, comprise a spacer element provided in the filter bowl and by which a (direct) contact of the sealing plug with the bottom section of the filter bowl is enabled only when the sealing plug, in the predefined direction of the rotation of the filter lid, is positioned in between the interfering structure of the filter bowl, in particular the said further flow opening, and the drain hole. In this instance, the filter element first makes contact with the spacer element when screwing the filter lid onto/into the filter. Once the filter element contacts the spacer element in an axial direction, the filter element initially cannot further move towards the bottom section of the filter bowl. The filter element is thus seated on the spacer element in an axial direction during this mounting stage of the filter element inside the filter housing/bowl. Upon further rotation and axial advancement of the filter lid towards the bottom section of the filter bowl, the drive cam or cams of the filter element will eventually engage in the recesses of the thrust collar of the filter lid. The filter element can then be rotated in the predefined direction of rotation when screwing the filter lid further onto/into the filter bowl.

Once the sealing plug of the filter element, by means of the filter lid, has been rotated to a position in between the interfering structure and the drain hole, the filter element disengages from the spacer element and can be further axially advanced by the filter lid until the sealing plug contacts the bottom section, that is the interior wall surface thereof. Once the filter element makes contact with the said bottom section (interior wall) of the filter bowl, the drive cam or cams, upon rotation of the filter lid, can again engage in the recesses of the filter element such that the filter element and the filter lid are again coupled in a torque-proof manner. The filter element is thus rotated in the predefined direction of rotation when further screwing the filter lid onto/into the filter bowl until the sealing plug is axially aligned with and engages with the drain hole. The axial movement of the filter element relative to the filter lid associated therewith, leads to a disengagement of the drive cams from the recesses of the thrust collar thus again enabling a free rotation of the filter lid with respect to the filter element. Further rotation of the filter lid, with its pitched free edge sections contacting the drive cam or cams of the filter element in an axial direction, effects pushing the filter element in an axial direction into its predefined mounting position in which the sealing plug seals off the drain hole as has been explained above.

According to a preferred embodiment of the invention the spacer element is formed by a pipe socket which is arranged concentrically to the longitudinal axis of the filter housing and which axially projects from the bottom section. The pipe socket thus has a double function and further serves for guiding the fluid within the filter housing. Thereby, the number of parts of the filter system may be kept small. Preferably, the pipe socket is fluidly connected to the fluid inlet or fluid outlet of the filter housing.

According to a yet further embodiment of the invention, the recesses of the thrust collar are each limited by lateral wall sections which are diverging from one another in an axial direction towards the at least one free edge of the thrust collar. Thereby, an engagement and/or disengagement of the drive cams can be further facilitated. According to the invention, this can be further supported if the drive cams are tapered in an axial direction. The drive cams can, for instance have a triangle or at least partially conical form.

According to a further embodiment of the invention, the sealing plug is arranged on, in particular molded onto, a first end disc of the filter element. This allows for an inexpensive manufacture of the filter element. The end disc may advantageously be formed as a plastic injection molded part.

The said first end disc of the filter element is preferably provided with a central hole for an engagement of the pipe socket.

According to a further embodiment of the invention, the filter element, in particular the said end disc thereof, is provided with a stop element for an axial contacting of the spacer element, wherein the stop element projects from the first end disc into a radial direction.

According to a yet further embodiment of the invention, the cams are arranged on, in particular molded onto, a second end disc of the filter element. This allows for a cost-efficient manufacture of the filter element. The second end disc may be formed as a plastic injection molded part.

The filter element may have a filter medium which is arranged in a circular fashion around the longitudinal axis of the filter element and which, preferably, is positioned in between a first and a second end disc of the filter element.

The object of the invention is further solved by a filter element for a filter system as described before.

### Brief description of drawings

Other advantages and features of the invention will be appreciated from the following description of an embodiment of the invention with reference to the figures of the drawings, which show significant details and from the claims. The individual features may each be carried out individually or carried out together in any combination in variants of the invention. In the drawing,
- Figure 1: shows in a schematic side view individual parts of a filter system having a filter housing with a filter bowl, a filter lid and a filter element;
- Figure 2: shows a magnified cross section of a detail of figure 1 at the upper part of the filter element;
- Figure 3: shows the magnified detail of figure 2 from the outside;
- Figure 4: shows a perspective view of a part of the inside of the filter lid;
- Figure 5: shows a perspective view of the filter element;
- Figure 6: shows a magnified cross section of a detail of figure 1 at the lower part of the filter element;
- Figures 7a-c: show cross sections of three different sealing plugs; and
- Figures 8a-c: show an upper part of the filter system of figure 1 during assembly of the filter element.

### Detailed description

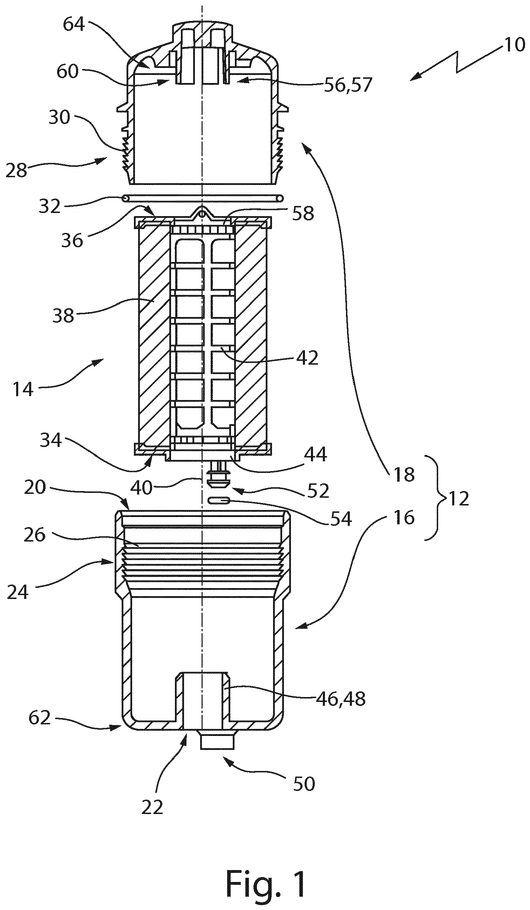

**FIG. 1** shows a filter system **10** for filtering a fluid, in particuar fuel or oil, in particular for a combustion engine of a motor vehicle or the like. The filter system 10 comprises a filter housing **12** and a filter element **14** which needs to be positioned inside the filter housing 12 for use of the filter system 10. The filter housing 12 may be made of any suitable material such as metal, plastics or a composite material. The filter housing 12 basically shows a two-part design and comprises a filter bowl **16** and a filter lid **18** which serves to sealingly close an insertion opening **20** of the filter bowl 16 through which the filter element 14 may be inserted into and removed from the filter bowl 16. The filter housing 12, of course, has a fluid inlet for the fluid to be filtered which may be provided on the filter lid 18 and/or on the filter bowl 16 and a fluid outlet **22** for the filtered fluid on the filter lid 18 and/or on the filter bowl 16, which, for purpose of illustraton, is positioned on the filter bowl 16.

The filter bowl 16 has a first threaded portion **24** which, in the present embodiment, comprises an internal thread **26.** The filter lid 18 has a second threaded portion **28** corresponding to the first threaded portion 26 of the filter bowl 16 and which has an outer thread **30.** According to an alternative embodiment, the outer thread 30 may be provided on the filter bowl 16 with a corresponding inner thread being provided on the filter lid 18. In this case, the filter lid 18 may be screwed onto the filter bowl 16. The said threaded portions 24, 28, in any case, allow for directly threading the filter lid 18 on the filter bowl 16 to thereby close-off the insertion opening 20 of the filter bowl 16. It is needless to say that there may be one or more sealing rings **32** or the like provided on the filter lid 18 and/or on the filter bowl 16 for a fluid- and pressuretight closure of the filter housing 12.

The filter element 14 has first and second end discs **34, 36** and a filter medium **38** which is held in between the end discs 34, 36. The filter medium 38 may be embedded in the material of the end discs 34, 36, or, alternatively, may be glued or welded to the end discs 34, 36. The filter medium 38 is made from a material which is suitable for use with the respective fluid to be filtered. According to FIG. 1, the filter medium 38 is formed as a bellow which is arranged in a ring-shaped fashion around the longitudinal axis **40** of the filter element 14 and the filter housing 12 as well. During use of the filter system 10, the fluid may flow through the filter medium 38 in a radial direction from an outside to an inside of the filter medium 38. There may be a latticed or grid-shaped support tube **42** located inside the filter element 14 which serves as a radial support of the filter medium 38. By this, an undesired collapse of the filter medium 38 can be prevented during use. The filter medium 38 may directly or indirectly abut against the outside of the said support tube 42.

Of note, the first end disc 34 of the filter element 14 is provided with a first central opening **44** which serves for threading the filter element 14 on a spacer element **46,** which in the present embodiment, is formed by a fluid outlet tube or pipe socket **48** that is fluidly connected to the fluid outlet 22 of the filter housing 12.

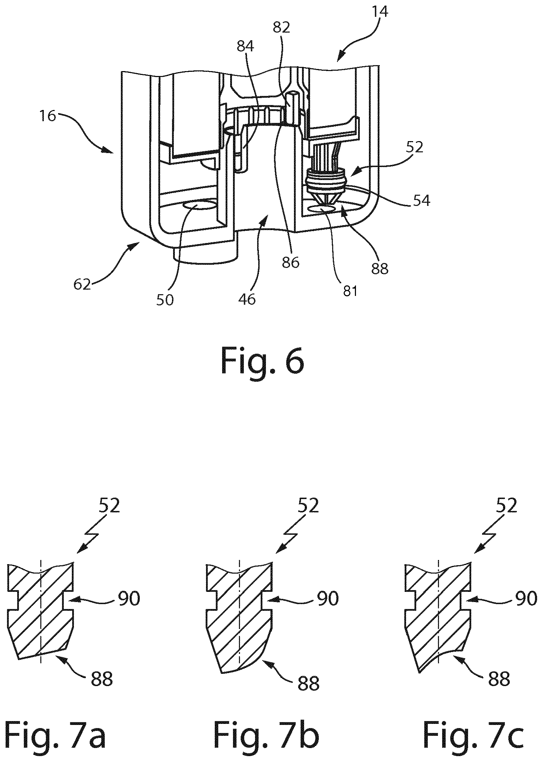

The filter bowl 16 is provided with a drain hole **50** for drainage of fluid located inside the filter housing 12. The drain hole 50 is closed by the filter element 14 when positioned in its predetermined mounting position inside the filter housing 12. The filter element 14, for this, has a sealing pin or plug **52** which is provided on the lower first end disc 34. The said sealing plug 52 is seated eccentrically on the sealing first end disc 34 with respect to the longitudinal axis 40 of the filter element 14 and projects away from the end disc 34 in an axial direction. For an easy manufacture of the filter element 14, the sealing plug 52 is preferably directly molded to the first end disc 34. Of course, the sealing plug may alternatively be attached to the filter element in other suitable ways known to the skilled person. The sealing plug 52 may be provided with a sealing ring **54** (see also FIG. 6) for sealing-off the drain hole 50 (see also FIG. 6) during use of the filter housing 12. There is no separate drain plug or drain screw provided, in particular no drain plug or drain screw which is inserted into the drain hole 50 from an outside of the filter housing 12.

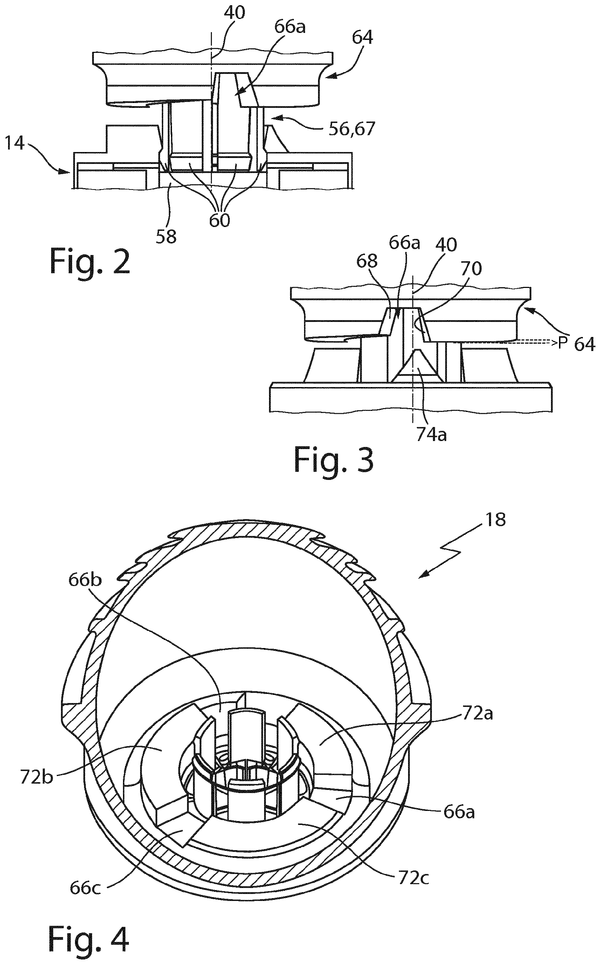

Further, according the embodiment of the invention shown in FIG. 1, the filter lid 18 may be provided with coupling means **56** which serve for coupling the filter element 14 to the filter lid 18 with both an axial play and in a rotatable manner with respect thereto. Of note, there is some (minor) rotary friction existent between the filter lid and the filter element 14 when coupled to one another. The coupling means 56 may, in particular, comprise latching fingers **57** which may be introduced through a central hole **58** provided in the upper second end disc 36 of the filter element 14 and which may have a hook portion **60** for engaging behind the second end disc 36 of the filter element 14 as is shown in more detail in FIG. 2. The latching fingers 57 are preferably arranged in a cirular fashion around the longitudinal axis 40 of the filter housing 12 and may be elastically deflected from the resting state shown in FIG. 1 in a radial direction to the inside (that is towards the longitudinal axis 40) for a facilitated insertion into the filter element 14.

The filter system 10 is further provided with specific positioning means for mounting the filter element 14 in its predetermined mounting position inside the filter housing 12 in which the sealing plug 52 sealingly extends into the drain hole 50 of a bottom section 62 of the filter bowl 16.

The positioning means comprise a ring-shaped thrust collar **64** provided on an inside of the filter lid 18 for advancing the filter element 14, in the direction of the longitudinal axis 40 of the filter housing 12, towards the bottom section 62 of the filter bowl 16. The thrust collar 64, as is shown in **FIGS. 2 and 3**, is arranged concentrically to the longitudinal axis 40 of the filter housing 12 (FIG. 1). The thrust collar 64 is provided with several recesses **66a, 66b, 66c** (**FIG. 4**) for an intermittent torque-proof engagement of the filter element 14 to position the filter element 14 in a rotary position with respect to the longitudinal axis 40 of the filter housing 12 (see FIG. 1) in which the sealing plug 52 (see FIG. 1) is aligned with the drain hole 50 (see FIG. 1) of the bottom section 62 (see FIG. 1) in an axial direction.

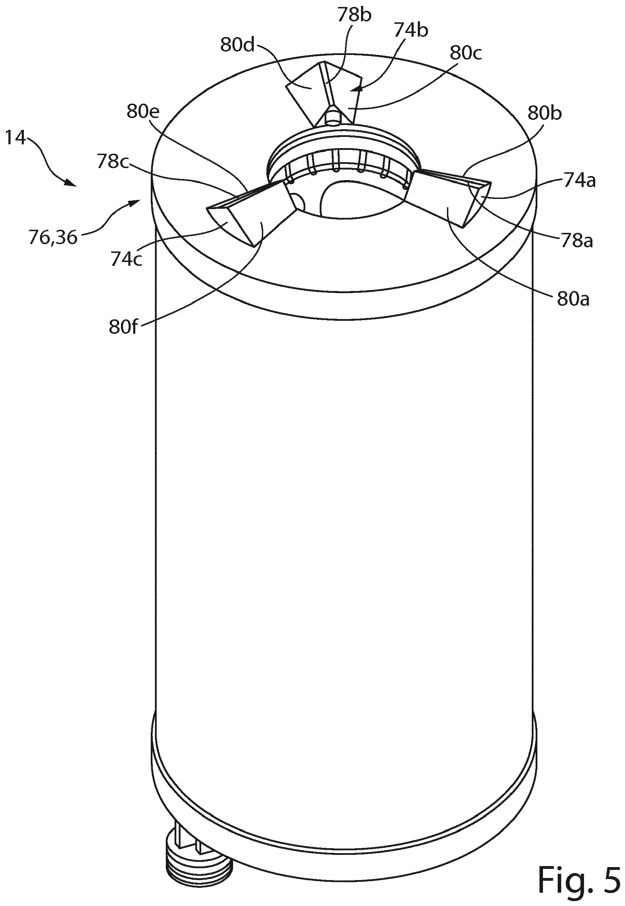

The thrust collar 64 shows, in an exemplary manner, three recesses 66a - 66c which are arranged in a circumferential direction equally spaced apart from one another (see FIG. 4). It needs to be noted that each recess 66a - 66c (see FIG. 3) is limited by first and second lateral wall sections **68, 70** which are diverging from one another in an axial direction towards a free edge of the thrust collar 64. The free edge of the thrust collar 64 is divided by the recesses 66a - 66c (see FIG. 4) into three free edge sections **72a, 72b, 72c,** each of which run in a spiral with a defined pitch **P** around the longitudinal axis 40 of the filter housing 12. Said pitch P is equal to or smaller than the said thread pitch of the filter bowl 16 and filter lid 18 with respect to the longitudinal axis 40 of the filter housing 12. The second lateral wall section 70 (FIG. 3) of each recess 66a - 66c has an axial length which is greater than the axial length of the corresponding first lateral wall section 68 such that the second lateral wall section 70 of each recess 66a - 66c projects beyond the first lateral wall section 68 in an axial direction. The second lateral wall sections 70 thereby form a rotating stop for drive cams **74a, 74b, 74c** (see Figs. 5 and 3) of the filter element 14.

Said drive cams 74a - 74c are arranged on a second end portion **76,** here the second end disc 36, of the filter element 14 with each of the drive cams 74a - 74c projecting from the second end disc 36 in the direction of the longitudinal axis 40 of the filter element 14 away from the filter element 14 as can be seen in FIG. 1. Each drive cam 74a - 74c has a free end **78a, 78b, 78c** for contacting the free edge of the thrust collar 64 and lateral faces **80a, 80b, 80c, 80d, 80e, 80f** which converge in the direction of the longitudinal axis 40 (see FIG. 1) of the filter element 14 to allow for a facilitated engagement and also disengagement of the respective recesses 66a - 66c (see FIG. 4) of the thrust collar 64 when a defined torque between the filter lid 18 and the filter element 14 is exceeded.

The spacer element 46 is configured, structured and designed in such a way so as to prevent an unwanted engagement of the sealing plug 52 with an interfering structure of the filter bowl, in particular a further fluid opening 81 (FIG. 6), which is disposed on the bottom section 62 thereof. The further fluid opening 81 may, for instance, serve as a fluid inlet of the filter housing 12 for the fluid to be filtered by the filter element 14. It is to be understood, that the aforementioned interfering structure does not necessarily need to be a fluid opening but may also be formed by another component of the filter bowl such as a sensor, a heating unit or the like and which protrudes from the bottom section of the filter bowl 16 into the interior of the filter bowl 16 in an axial direction.

For mounting the filter element 14 inside the filter bowl 16, the filter element 14, in a first step, is rotatably coupled to the filter lid 18. For this, the coupling means 56 or latching fingers 57 are, in the direction of the longitudinal axis 40 of the filter element, introduced into the central opening 58 of the upper second end disc 36 of the filter element 14 until the latching fingers 57 are interlocked with the second end disc 36. Following this, the filter element 14 is inserted into the filter bowl 16 which is preferably already mounted in its predetermined mounting position in a vehicle or the like along the axial direction, i.e. parallel to the longitudinal axis 40 of the filter system 10. Then, the filter lid 18 is rotated in the screw-in direction such that the second threaded portion 28 of the filter lid 18 engages the first threaded portion 24 of the (stationary) filter bowl 16.

The thrust collar 64 of the filter lid 18 does not contact the drive cams 74a - 74c of the filter element 14 in an axial direction until the filter element 14, in the present embodiment, makes axial contact with the spacer element 46 of the filter bowl 16. This assembly or mounting phase is depicted in FIG. 3. When screwing the filter lid 18 further into the filter bowl 16, the filter element 14, with its first (lower) end disc 34 contacts the outlet tube 48 which serves as a spacer element 46 for the filter element 14.

In an alternative embodiment the spacer element 46 can be located at the outer inside perimeter of filter bowl 16.

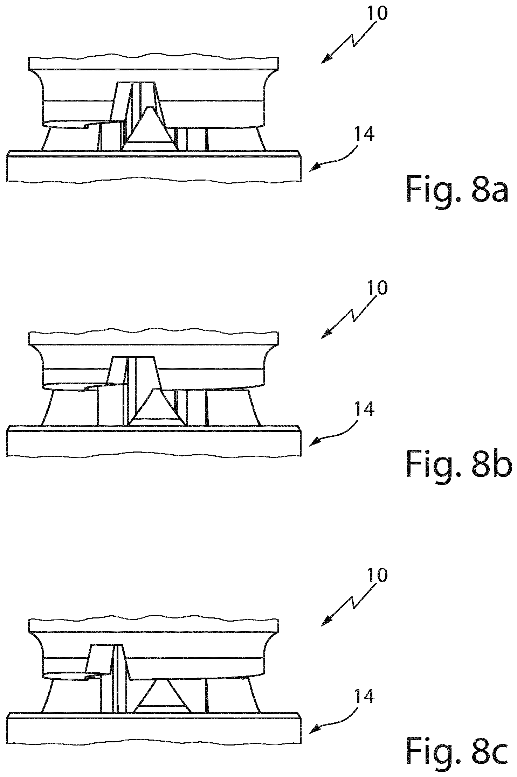

Upon further screwing-in the filter 18 lid in the screw-in direction, this results in an axial movement of the filter lid 18 relative to the filter element 14. The drive cams 74a - 74c of the filter element 14 will eventually abut against the respective abutment surface of the thrust collar 64 of the filter lid 18, that is the second lateral surface 70 (see FIG. 3) of the recess 66a - 66c formed within the thrust collar 64. This results in a torque-proof coupling of the filter element 14 with the filter lid 18 which is then rotated in the same screw-in direction as the filter lid 18. Upon further rotation of the filter lid 18 and the filter element 14, the filter lid 18 is lowered axially in the direction of the bottom section 62 of the filter bowl 16. This approximation results in a further axial insertion (engagement) of the drive cams 74a - 74c into the respective recesses 66a - 66c of the thrust collar 64 as is depiceted in **FIG. 8a****.**

According to **FIG. 6****,** as the filter element 14 is rotated relative to the spacer element 46, a stop element **82** of the filter element 14, once it reaches an axial recess or passage **84** provided in and/or defined by the spacer element 46, is disengaged from the top rim **86** of the spacer element 46. The filter element 14 can then move axially in the direction to the bottom section 62 until the sealing plug 52 contacts the bottom section 62 of the filter bowl 16 or directly enters the drain hole.

In the former case, the drive cams 74a - 74c may be still engaging the recesses 66a - 66c of the thrust collar 64 as is depicted in **FIG. 8b** such that upon further screwing-in of the filter lid 18, the filter element 14 finally reaches a rotary position relative to the filter bowl 16 in which the sealing plug 52 is aligned to the drain hole 50 in an axial direction and falls into the drain hole 50 due to gravity. The drive cams 74a - 74c of the filter element 14 may be disengaged from the recesses 66a - 66c of the thrust collar 64 of the filter lid 18 due to the associated axial movement of the filter element 14 in the direction of the bottom section alone or upon further screwing-in of the filter lid 18 into the filter bowl 16 and an axial propulsion of the filter element associated therewith.

The thrust collar 64 then contacts the drive cams 74a - 74c of the filter element 14 only in an axial direction with its free edge sections 72a, 72b, 72c once the drive cams 74a - 74c of the filter element 14 are disengaged from the recesses 66a - 66c of the thrust collar 64 as is best seen in **FIG. 8c****.** Due to the fact that the internal/external threads 26, 30 of the threaded portions 24, 28 of the filter lid 18 and the filter bowl 16, respectively, have an equal or greater pitch than the free edge (sections) of the thrust collar 64, the filter element 14 is further advanced in an axial direction into the filter bowl 16 until it reaches its predefined mounting position inside the filter housing 12 with the sealing plug 52 sealingly extending into the drain hole 50 of the filter bowl 16.

The sealing plug 52 of the filter element 14 may be realized with various shapes. According to FIG. 6, the sealing plug 52 may show a cylindrical base portion and a frusto-conical tip **88.** Alternatively, the tip 88 of the sealing plug 52 may have a beveled end (**FIG. 7a**), a beveled convex-shaped (**FIG. 7b**) or a beveled concave-shaped (**FIG. 7c**) end. There may be provided a radial groove **90** on the sealing plug for seating the sealing ring 54 shown in FIG. 6.

The filter system 10 described above thus allows for a quick, safe and easy mounting of a filter element 14 inside the filter housing 12 and at the same time provides protection against the use of non-suitable filter elements 14 and the known risks associated therewith.

Considering all figures mentioned above, the invention relates in conclusion to a filter system 10 having a filter element 14 and a filter housing 12 comprising a filter bowl 16 and a filter lid 18. The filter element 14 has a sealing plug 52 for sealingly closing off a drain hole 50 of the filter bowl 16 when mounted in a predetermined mouning position inside the filter housing 12. The filter element 14 is provided with one or more drive cams 74a - 74c that interact(s) with recesses 66a - 66c of the filter lid 18 in such a way that the filter element 14 is rotated towards the aforementioned predetermined mounting position by the filter lid 18 and pushed down towards the bottom section 62 of the filter bowl 16 by simply screwing the filter lid 18 into or onto the filter bowl 16. The invention further relates to a filter element 14 for the filter system 10 described above.

## Claims

1. Filter system (10) for filtering a fluid, in particular fuel or oil, in particular for a combustion engine of a motor vehicle, comprising:
- a filter housing (12) with a filter bowl (16) having a drain hole (50) provided in a bottom section (62) thereof and with a filter lid (18) for closure of the filter bowl (16), wherein the filter bowl (16) and the filter lid (18) each have a threaded portion (24, 28) corresponding to each other for directly screwing the filter lid (18) into or onto the filter bowl (16) in a predefined direction of rotation, wherein the threaded portions (24, 28) have a specified thread pitch with respect to the longitudinal axis (40) of the filter housing (12);
- a filter element (14) for arrangement inside the filter housing (12), the filter element (14) having a sealing plug (52) which is located eccentric with respect to a longitudinal axis (40) of the filter element (14) and which serves to seal off the drain hole (50) when the filter element (14) is seated in its predetermined mounting position inside the filter housing (12); and
- positioning means for positioning the filter element (14) in its predetermined mounting position, the positioning means comprising:
-- a ring-shaped thrust collar (64) positioned on an inside of the filter lid (18) for advancing the filter element (14) in the direction of the longitudinal axis (40) of the filter housing (12) towards the bottom section (62) of the filter bowl (16), wherein the thrust collar (64) has at least one recess (66a - 66c) for a torque-proof engagement of the filter element (14) to position the filter element (14) in a rotary position with respect to the longitudinal axis (40) of the filter housing (12) in which the sealing plug (52) is aligned with the drain hole (50) in an axial direction;
wherein the thrust collar (64) has one or more free edge sections (72a - 72c) which are each arranged spirally with a defined pitch around the longitudinal axis (40) of the filter housing (12), the pitch being equal to or smaller than the said thread pitch of the filter bowl (16) and filter lid (18); and
-- one or more drive cams (74a - 74c) which axially project(s) from an end portion (76) of the filter element (14) for engagement with the thrust collar (64).

2. The filter system according to claim 1, **characterized in that** the filter bowl (16) has an interfering structure at the bottom section (62) thereof, in particular a further fluid opening (81), wherein a spacer element (46) is provided in the filter bowl (16) by which a contact of the sealing plug (52) with the bottom section (62) of the filter bowl (16) is enabled only when the sealing plug (52), in the predefined direction of the rotation of the filter lid (18), is positioned in between the said interfering structure and the drain hole (50).

3. The filter system according to claim 2, **characterized in that** the spacer element (46) is designed as a pipe socket (48) which is arranged concentrically to the longitudinal axis (40) of the filter housing (12) and which axially projects from the bottom section (62) of the filter bowl (16).

4. The filter system according to claim 3, wherein the pipe socket (48) is fluidly connected to the fluid inlet or fluid outlet (22) of the filter housing (12).

5. The filter system according to any of the preceding claims, **characterized in that** the recesses (66a - 66c) of the thrust collar (64) are each limited by lateral wall sections (68, 70) which are diverging from one another in an axial direction towards the free edge of the thrust collar (64).

6. The filter system according to any of the preceding claims, **characterized in that** the one or more drive cams (74a - 74 c) is/are tapered in an axial direction.

7. The filter system according to any of the preceding claims, **characterized in that** the sealing plug (52) is arranged on, in particular molded onto, an end disc (36) of the filter element (14).

8. The filter system according to any one of the preceding claims in combination with claim 3, wherein an end disc (34) is provided with a central opening (44) for engagement of the pipe socket (48).

9. The filter system according to claim 2, wherein the filter element (14) has an end disc (34) which is provided with a stop element (82) for an axial contacting of the spacer element (46), wherein said stop element (82) projects from the end disc (34) in a radial direction.

10. The filter system according to any one of the preceding claims, **characterized in that** the one or more drive cams (74a - 74c) is/are arranged, in particular molded onto, on an end disc (36) of the filter element (14).

11. The filter system according to any of the preceding claims, wherein the thrust collar (64) is arranged concentrically with respect to the longitudinal axis (40) of the filter housing (12).

12. The filter system according to any one of the preceding claims, **characterized in that** the filter element (14) has a filter medium (38) which is arranged in a circular fashion around the longitudinal axis (40) of the filter element (14) and which is, preferably, positioned in between a first and a second end disc (34, 36) of the filter element (14).

13. A filter element (14), in particular for a filter system (10) according to any of the preceding claims, for an arrangement inside a filter housing (12), the filter element (14) having a sealing plug (52) which is located eccentric with respect to a longitudinal axis (40) of the filter element (14) and which serves to seal off a drain hole (50) when the filter element (14) is seated in a mounting position inside the filter housing (12); and the filter element (14) having positioning means for positioning the filter element (14) in its predetermined mounting position, the positioning means comprising:
one or more drive cams (74a - 74c) being arranged on a second end portion (76) of a second end disc (36) of the filter element (14) with each of the drive cams (74a - 74c) projecting from the second end disc (36) in the direction of the longitudinal axis (40) of the filter element (14) away from the filter element (14).

14. A filter element (14) according to claim 13, **characterized in that** the one or more drive cams (74a - 74 c) is/are tapered in the direction of the longitudinal axis (40) of the filter element (14) away from the filter element (14).

15. A filter element (14) according to claim 13 or 14, **characterized in that** the drive cams (74a - 74 c) have a triangle or at least partially conical form.
